# EUROPEAN PATENT APPLICATION

(11) **EP 4 063 465 A1**
(43) Date of publication of application: **28.09.2022**
(21) Application number: 20891143.8
(22) Date of filing: 19.08.2020
(51) Int. Cl.: C09K 5/06

(54) **FLEXIBLE MULTI-LEVEL PHASE CHANGE MATERIAL HAVING CROSS-LINKED NETWORK STRUCTURE AND PREPARATION METHOD THEREFOR**

(30) Priority: 21.11.2019 CN 201911150188
(71) Applicant: Sichuan Sanlian New Materials Co., Ltd, Chengdu, Sichuan 610000 (CN); China Tobacco Sichuan Industrial Co., Ltd., Chengdu, Sichuan 610000 (CN); Chengdu Meierfeng Tech Co., Ltd., Chengdu, Sichuan 610000 (CN)
(72) Inventor: HAN, Donglin, Chengdu, Sichuan 610000 (CN); DENG, Yong, Chengdu, Sichuan 610000 (CN); HUANG, Yuchuan, Chengdu, Sichuan 610000 (CN); WANG, Shuaipeng, Chengdu, Sichuan 610000 (CN); BAO, Yi, Chengdu, Sichuan 610000 (CN); ZHAO, Deqing, Chengdu, Sichuan 610000 (CN); ZHENG, Yi, Chengdu, Sichuan 610000 (CN); LIU, Kai, Chengdu, Sichuan 61000 (CN); XIE, Li, Chengdu, Sichuan 610000 (CN); SHI, Jianyang, Chengdu, Sichuan 61000 (CN); FU, Siyou, Chengdu, Sichuan 61000 (CN)
(74) Representative: Lermer, Christoph
(86) International application number: PCT/CN2020/110055
(87) International publication number: WO 2021/098309

(57) **Abstract**

The present invention relates to the technical field of polymer composites, and specifically to a flexible multi-level phase change material and a preparation method therefor. The present invention provides a flexible phase change material. The phase change material consists of the following components in parts by weight: 20-90 parts of a phase change function material, 5-75 parts of a cross-linked thermoplastic elastomer, 5-75 parts of thermoplastic resin, and 0-5 parts of a compatibilizer. Because the flexible phase change material obtained in the present invention has a cross-linked network structure, and the phase transition temperature thereof is multi-level, the flexible phase change material has high energy storage density; moreover, the method for the flexible phase change material can achieve large-scale industrial production.

## Description

### Field of the Invention

The present invention relates to the technical field of polymer composites, and specifically to a flexible multi-level phase change material having cross-linked network structure and preparation method therefor.

### Background of the Invention

Effective thermal management is a prerequisite for ensuring the safety, reliability and service life of electronic devices. With the rapid development of technologies in the fields such as aerospace, national defense and military industry, microelectronics and semiconductors, the miniaturization and high integration have pushed the heating energy per unit area of devices to increase geometrically, resulting in higher requirements for the performance of thermal management materials. Phase change energy storage material can store energy by absorbing a large amount of heat during the process of phase change of substances, and is one of the most promising thermal management materials currently. With advantages of high energy storage density, strong energy storage capacity, low degree of supercooling, stable chemical properties, non-toxicity, non-corrosion and low price, organic solid-liquid phase change materials - represented by polyethylene glycol and paraffin - are receiving extensive attention in the applications such as thermal management of electronic devices. However, the biggest problem of organic phase change materials is that they are easy to leak during the phase change process. According to traditional solutions, phase change materials are encapsulated in inorganic or metallic 3D porous materials, such as graphene aerogels, carbon foams, expanded graphite, nickel metal foams, etc. But these inorganic or metallic 3D porous materials require complex preparation methods such as CVD, ice templating, hydrothermal method, etc., so the preparation cost is high and it is therefore difficult to achieve large-scale preparation and application. Moreover, the phase change composites obtained by these methods do not possess flexibility and processability, making it difficult to prepare complex structures. Meanwhile, the traditional phase change materials at present generally can only conduct single-phase change, which further limits the application of phase change materials and the cooling and temperature control effect in a large temperature range. Therefore, it is of great significance to develop a flexible multi-level phase change energy storage material that can be prepared on a large scale with high energy storage density, excellent thermal stability and low cost.

### Summary of the Invention

In view of the above defects, the purpose of the Invention is to provide a flexible phase change material and preparation method therefor, and the obtained flexible phase change material has a cross-linked network structure as well as multi-level phase transition temperatures; moreover, it is able to realize large-scale industrial production by utilizing the preparation method for the flexible phase change material.

The technical scheme of the Invention:
The first technical problem to be solved by the Invention is to provide a flexible phase change material. The phase change material consists of the following components in parts by weight:
20-90 parts of a phase change function material,
5-75 parts of a cross-linked thermoplastic elastomer,
5-75 parts of thermoplastic resin,
and 0-5 parts of a compatibilizer.

Further, the flexible phase change material has a cross-linked network structure.

Further, the phase transition temperature of the flexible phase change material is multi-level, and the flexible phase change material has at least 2 phase transition temperatures in the range of 10°C-200°C.

Further, the flexible phase change material is made by the following method: with a phase change function material, a cross-linked thermoplastic elastomer, thermoplastic resin and a compatibilizer as raw materials and the method of melt blending, the molten phase change function material enter the cross-linked thermoplastic elastomer to swell it, meanwhile the cross-linked thermoplastic elastomer is able to prevent the leakage of the phase change function material due to its polymer network, and thus, the flexible phase change material is produced.

Further, the phase change function material is an organic phase change material or an inorganic phase change material.

Further, the organic phase change material is at least one of paraffin, polyol, alcohol polymer or carboxylic acid.

Preferably, the alcohol polymer is polyethylene glycol, the carboxylic acid is stearic acid, and the paraffin is liquid paraffin or paraffin wax.

Further, the thermoplastic elastomer in the cross-linked thermoplastic elastomer is one or more of ethylene-octene block copolymer (POE), ethylene-octene random copolymer (OBC), ethylene propylene rubber (EPDM), polyurethane elastomer, styrene-butadiene-styrene block copolymer (SBS) and hydrogenated styrene-butadiene-styrene block copolymer (SEBS).

Further, the thermoplastic resin is at least one of low density polyethylene (LDPE), high density polyethylene (HDPE), polypropylene (PP), polybutylene (PB), polyvinyl acetate (PVAC), polystyrene (PS), polycarbonate (PC), polyamide (PA), polyurethane (PU) or polyvinylidene fluoride (PVDF). The addition of thermoplastic resin can significantly improve the processability of phase change materials and meanwhile provide multi-level phase transitions.

Further, the compatibilizer is one of a maleic anhydride compatibilizer or an acrylic compatibilizer.

The second technical problem to be solved by the Invention is to provide the preparation method for the flexible phase change material. The preparation method is as follows: with a phase change function material, a cross-linked thermoplastic elastomer, thermoplastic resin and a compatibilizer as raw materials and the method of melt blending, the molten phase change function material enter the cross-linked thermoplastic elastomer to swell it, meanwhile the cross-linked thermoplastic elastomer is able to prevent the leakage of the phase change function material due to its polymer network, and thus, the flexible phase change material is produced; wherein, the weight ratio of raw materials is: 20-90 parts of a phase change function material, 5-75 parts of a cross-linked thermoplastic elastomer, 5-75 parts of thermoplastic resin, and 0-5 parts of a compatibilizer.

Further, in the above preparation method, the temperature for melt blending process is above the melting point and below the thermal decomposition temperature of the thermoplastic resin.

Further, the preparation method is as follows: melt and blend the phase change function material, the cross-linked thermoplastic elastomer, the thermoplastic resin and the compatibilizer at 80°C-250°C, then carry out extrusion granulation to obtain flexible phase change pellets; and then carry out processing and molding to obtain flexible phase change materials.

Further, in the above method, the processing and molding are performed by means of injection molding, tape casting or melt spinning.

Further, in the above method, the cross-linked thermoplastic elastomer is prepared by irradiation cross-linking or by adding a cross-linking agent.

Preferably, the cross-linked thermoplastic elastomer is cross-linked by adding a cross-linking agent, the cross-linking agent is dicumyl peroxide, di-tert-butyl peroxide or tert-butyl phenolic resin; the cross-linking temperature is 120°C-190°C, the cross-linking time is 0.5-10 minutes, and the content of the cross-linking agent is 0.1phr-5phr.

The third technical problem to be solved by the Invention is to provide a method for improving the thermal stability of phase change function materials, that is, to introduce a cross-linked thermoplastic elastomer and thermoplastic resin into the phase change function material, and then prepare a flexible phase change material by melt blending; wherein, the weight ratio of raw materials is: 20-90 parts of a phase change function material, 5-75 parts of a cross-linked thermoplastic elastomer, and 5-75 parts of thermoplastic resin.

Further, in the above method, a compatibilizer can also be added with an amount of 0.1-5 parts.

The invention has the following advantageous effects:
The flexible phase change material obtained in the Invention has the following advantages: 1) more excellent thermal stability - the phase change material is able to have excellent thermal stability by utilizing the cross-linked elastomer as the supporting material; 2) more excellent flexibility and processability - the material can be prepared into any desired shape (including fibers and films) and large scale preparation is possible by utilizing melt processing; 3) high energy storage density - the energy storage density of the phase change materials can maintain 40%-95% of that of phase change function materials. The flexible phase change material obtained by the Invention can be applied to the fields of aerospace, national defense and military industry, microelectronics, semiconductors, etc.

### Brief Description of the Drawings

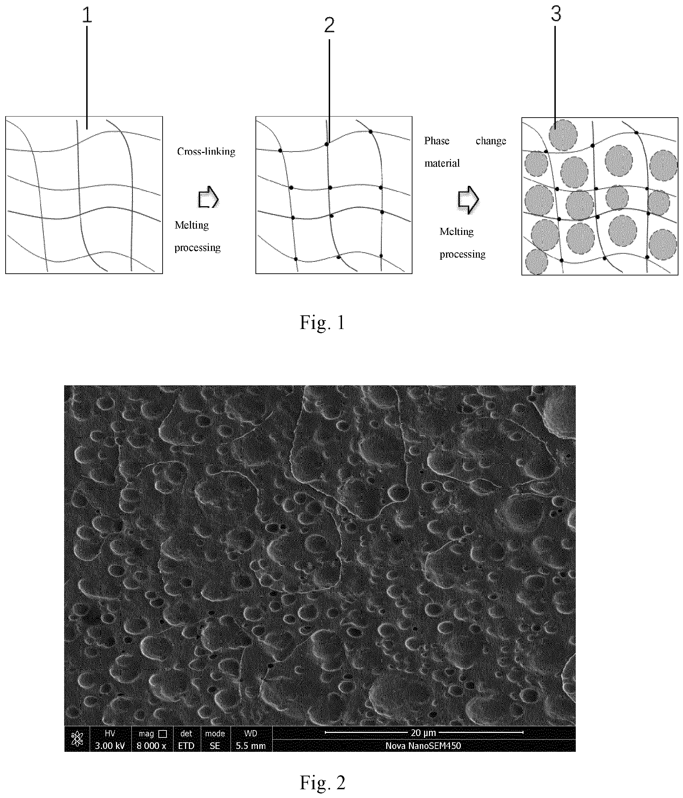

Fig. 1 is the schematic diagram for preparation method and structure of the flexible phase change material in the Invention based on "swelling" mechanism, wherein mark 1 indicates the uncrosslinked thermoplastic elastomer, mark 2 the chemical crosslinking point in the cross-linked thermoplastic elastomer, and mark 3 the phase change function material swollen in the cross-linked polymer network; the preparation method for the flexible phase change material in the Invention is as follows: by utilizing the "swelling" mechanism, the phase change function material melted at high temperature can enter between the cross-linked molecular chains of polymer and make it swell, and the binding effect of the cross-linked polymer network prevents the leakage of the phase change function material, and thermal stability is thus improved.
Fig. 2 is the SEM image of the section of the flexible phase change material obtained in the Embodiment 1. The section of the flexible phase change material is obtained after being quenched in liquid nitrogen, and the section has been etched with chloroform; it can be concluded from Fig. 2 that the paraffin is uniformly distributed in other polymer matrices as "island phase".

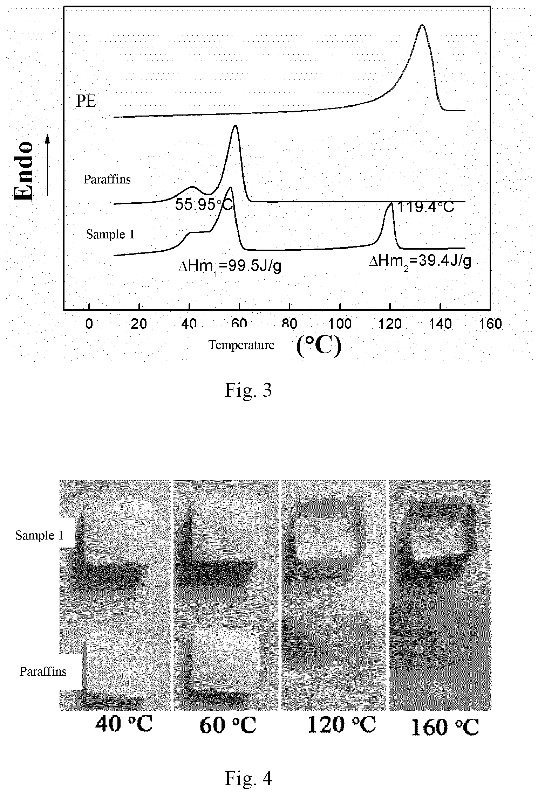

Fig. 3 is the DSC heating curve of the flexible phase change material obtained in the Embodiment 1; it can be concluded from Fig. 3 that the sample 1 has three phase transition temperatures at 40.01°C, 55.95°C and 119.4°C respectively, and the enthalpy value for phase transition is 138.9kJ/kg.
Fig. 4 shows the thermal stability test of the flexible phase change material obtained in the Embodiment 1 and the paraffin used. It can be concluded from Fig. 4 that the phase change material obtained in the Invention can maintain a good shape without any leakage when being placed under a temperature of 160°C.

### Description of the Preferred Embodiments

The first technical problem to be solved by the Invention is to provide a flexible phase change material. The phase change material consists of the following components in parts by weight:
20-90 parts of a phase change function material,
5-75 parts of a cross-linked thermoplastic elastomer,
5-75 parts of thermoplastic resin,
and 0-5 parts of a compatibilizer.

The phase transition temperature of the flexible phase change material is multi-level, and the flexible phase change material has at least 2 phase transition temperatures in the range of 10°C-200°C, including the phase transition of the phase change function material and the phase transition of the thermoplastic resin; the multi-level phase change process can help expand the application of phase change materials and improve the cooling and temperature control effect in a large temperature range.

The second technical problem to be solved by the Invention is to provide the preparation method for the flexible phase change material. The preparation method is as follows: with a phase change function material, a cross-linked thermoplastic elastomer, thermoplastic resin and a compatibilizer as raw materials and the method of melt blending, the molten phase change function material enters the cross-linked thermoplastic elastomer to swell it, and thus, the flexible phase change material is produced; wherein, the weight ratio of raw materials is: 20-90 parts of a phase change function material, 5-75 parts of a cross-linked thermoplastic elastomer, 5-75 parts of thermoplastic resin, and 0-5 parts of a compatibilizer.

The flexible phase change material provided in the Invention has multi-level phase transition temperatures in the range of 10°C-200°C, and can realize temperature drop in the temperature range of 100°C-200°C. It consists of following components: a phase change function material, a cross-linked thermoplastic elastomer, thermoplastic resin and a compatibilizer.

The Invention prepares a flexible phase change material by utilizing the molten phase change function material to "swell" the cross-linked thermoplastic elastomer. The dissolution of polymer goes through two stages: firstly, the solvent molecules penetrate into the polymer to make it "swell", and then the molecular chains of polymer are uniformly distributed in the solvent. The cross-linked thermoplastic elastomer would also swell when in contact with the molten phase change function material. However, due to the binding effect of the cross-linked network, the molecules of the molten phase change function material cannot further disassemble the cross-linked molecular network and can only stay in the swelling stage. In this Invention, it is exactly this "swelling" mechanism that we utilize to prepare flexible phase change materials. The phase change function materials melted at high temperature can enter between the cross-linked molecular chains of polymer and make it swell, and the binding effect of the polymer network prevents the leakage of the phase change function materials, and thermal stability is thus improved.

### Embodiment 1:

Firstly, mix POE and DCP in a mass ratio of 100:0.5, and blend and granulate with an extruder at 160°C to obtain a cross-linked POE thermoplastic elastomer.

Then, melt and blend the cross-linked POE, granular paraffin with a phase transition temperature of 58°C and HDPE6098 in a mass ratio of 20:50:30, and blend and granulate with an extruder at 180°C to obtain phase change material pellets; conduct tape casting for the phase change material pellets on a casting equipment to produce a film (sample 1) at a casting temperature of 180°C, and the thickness of the obtained casting film could be controlled in the range of 0.01mm-0.1mm.

Apply the differential scanning calorimeter of TA Company to measure the melting curve of the phase change material. Fig. 3 is the DSC heating curve of the flexible phase change material obtained in the Embodiment 1; it can be concluded from Fig. 3 that sample 1 has three phase transition temperatures at 40.01°C, 55.95°C and 119.4°C respectively, and the enthalpy value for phase transition is 138.9kJ/kg; the final energy storage density can maintain at about 80% of that of the phase change function material. Fig. 4 shows the thermal stability test of the flexible phase change material obtained in the Embodiment 1. It can be concluded from the figure that the phase change material can maintain a good shape without any leakage when being placed under a temperature of 160°C.

Fig. 2 is the SEM image of the section of the flexible phase change material obtained in the Embodiment 1. The section of the flexible phase change material is obtained after being quenched in liquid nitrogen, and the section has been etched with chloroform; it can be concluded from Fig. 2 that the paraffin is uniformly distributed in other polymer matrices as "island phase".

### Embodiment 2:

Mix OBC and DCP in a mass ratio of 100:0.3, and blend and granulate with an extruder at 160°C to obtain a cross-linked OBC thermoplastic elastomer.

Melt and blend the cross-linked OBC, granular paraffin with a phase transition temperature of 58°C and PP in a mass ratio of 10:60:30, and blend and granulate with an extruder at 190°C to obtain phase change material pellets; conduct injection molding for the phase change material pellets on an injection molding machine to produce a sample with specific size at an injection molding temperature of 190°C.

Apply the differential scanning calorimeter of TA Company to measure the melting curve of the phase change material. The sample has three phase transition temperatures at 40.01°C, 55.95°C and 165.7°C respectively, and the enthalpy value for phase transition is 151.3kJ/kg; the final energy storage density can maintain at about 90% of that of the phase change function material. The phase change material can maintain a good shape without any leakage when being placed under a temperature of 160°C.

### Embodiment 3:

Firstly, mix SEBS and DCP in a mass ratio of 100:0.5, and blend and granulate with an extruder at 160°C to obtain a cross-linked SEBS thermoplastic elastomer.

Melt and blend the cross-linked SEBS, granular paraffin with a phase transition temperature of 58°C and HDPE6098 in a mass ratio of 20:60:20, and blend and granulate with an extruder at 200°C to obtain phase change material pellets; conduct injection molding for the phase change material pellets on an injection molding machine to produce a sample with specific size at an injection molding temperature of 200°C.

Apply the differential scanning calorimeter of TA company to measure the melting curve of the phase change material. The sample has three phase transition temperatures at 39.70°C, 56.13°C and 120.1°C respectively, and the enthalpy value for phase transition is 150.1kJ/kg; the final energy storage density can maintain at about 80% of that of the phase change function material. The phase change material can maintain a good shape without any leakage when being placed under a temperature of 160°C.

### Embodiment 4:

Mix OBC and DCP in a mass ratio of 100:0.3, and blend and granulate with an extruder at 160°C to obtain a cross-linked OBC thermoplastic elastomer.

Melt and blend the cross-linked OBC, PEG with a phase transition temperature of 60°C, HDPE6098 and PP in a mass ratio of 10:60:20:10, and blend and granulate with an extruder at 190°C to obtain phase change material pellets; conduct injection molding for the phase change material pellets on an injection molding machine to produce a sample with specific size at an injection molding temperature of 190°C.

Apply the differential scanning calorimeter of TA company to measure the melting curve of the phase change material. The sample has three phase transition temperatures at 60.01°C, 55.15°C and 165.7°C respectively, and the enthalpy value for phase transition is 158.8kJ/kg; the final energy storage density can maintain at about 90% of that of the phase change function material. The phase change material can maintain a good shape without any leakage when being placed under a temperature of 160°C.

Although the Invention is described above in conjunction with the embodiments, it should be apparent to a person skilled in the art that modifications can be made to the above embodiments without departing from the spirit and scope of the claims.

## Claims

1. A flexible phase change material, wherein, the phase change material consists of the following components in parts by weight:
20-90 parts of a phase change function material,
5-75 parts of a cross-linked thermoplastic elastomer,
5-75 parts of thermoplastic resin,
and 0-5 parts of a compatibilizer.

2. The flexible phase change material according to Claim 1, wherein, the flexible phase change material has a cross-linked network structure.

3. The flexible phase change material according to Claim 1 or Claim 2, wherein, the phase transition temperature of the flexible phase change material is multi-level, and the flexible phase change material has at least 2 phase transition temperatures in the range of 10°C-200°C.

4. The flexible phase change material according to any of claims 1-3, wherein, the flexible phase change material is made by the following method: with a phase change function material, a cross-linked thermoplastic elastomer, thermoplastic resin and a compatibilizer as raw materials and the method of melt blending, the molten phase change function material enter the cross-linked thermoplastic elastomer to swell it, meanwhile the cross-linked thermoplastic elastomer is able to prevent the leakage of the phase change function material due to its polymer network, and thus, the flexible phase change material is produced.

5. The flexible phase change material according to any of claims 1-4, wherein, the phase change function material is an organic phase change material or an inorganic phase change material.

6. The flexible phase change material according to Claim 5, wherein, the organic phase change material is at least one of paraffin, polyol, alcohol polymer or carboxylic acid.

7. The flexible phase change material according to Claim 6, wherein, the alcohol polymer is polyethylene glycol, the carboxylic acid is stearic acid, and the paraffin is liquid paraffin or paraffin wax.

8. The flexible phase change material according to any of claims 1-4 , wherein, the thermoplastic elastomer in the cross-linked thermoplastic elastomer is one or more of ethylene-octene block copolymer, ethylene-octene random copolymer, ethylene propylene rubber, polyurethane elastomer, styrene-butadiene-styrene block copolymer and hydrogenated styrene-butadiene-styrene block copolymer.

9. The flexible phase change material according to any of claims 1-4, wherein, the thermoplastic resin is at least one of low density polyethylene, high density polyethylene, polypropylene, polybutylene, polyvinyl acetate, polystyrene, polycarbonate, polyamide, polyurethane or polyvinylidene fluoride.

10. The flexible phase change material according to any of claims 1-4, wherein, the compatibilizer is one of a maleic anhydride compatibilizer or an acrylic compatibilizer.

11. The preparation method for the flexible phase change material according to any of claims 1-10, wherein, the preparation method is: with a phase change function material, a cross-linked thermoplastic elastomer, thermoplastic resin and a compatibilizer as raw materials and the method of melt blending, the molten phase change function material enter the cross-linked thermoplastic elastomer to swell it, meanwhile the cross-linked thermoplastic elastomer is able to prevent the leakage of the phase change function material due to its polymer network, and thus, the flexible phase change material is produced; wherein, the weight ratio of raw materials is: 20-90 parts of a phase change function material, 5-75 parts of a cross-linked thermoplastic elastomer, 5-75 parts of thermoplastic resin, and 0-5 parts of a compatibilizer.

12. The preparation method for the flexible phase change material according to Claim 11, wherein, in the preparation method, the temperature for melt blending process is above the melting point and below the thermal decomposition temperature of the thermoplastic resin.

13. The preparation method for the flexible phase change material according to Claim 12, wherein, the preparation method is: melt and blend the phase change function material, the cross-linked thermoplastic elastomer, the thermoplastic resin and the compatibilizer at 80°C-250°C, then carry out extrusion granulation to obtain flexible phase change pellets; and then carry out processing and molding to obtain flexible phase change materials.

14. The preparation method for the flexible phase change material according to Claim 13, wherein, the processing and molding are performed by means of injection molding, tape casting or melt spinning.

15. The preparation method for the flexible phase change material according to any of claims 11-14, wherein, the cross-linked thermoplastic elastomer is prepared by irradiation cross-linking or by adding a cross-linking agent.

16. The preparation method for the flexible phase change material according to Claim 15, wherein, the cross-linked thermoplastic elastomer is cross-linked by adding a cross-linking agent, the cross-linking agent is dicumyl peroxide, di-tert-butyl peroxide or tert-butyl phenolic resin, the content of the cross-linking agent is 0.1phr-5phr, the cross-linking temperature is 120°C-190°C, and the cross-linking time is 0.5-10 minutes.

17. A method for improving the thermal stability of phase change function materials, wherein the method is as follows: introduce a cross-linked thermoplastic elastomer and thermoplastic resin into the phase change function material, and then prepare a flexible phase change material by melt blending; wherein, the weight ratio of raw materials is: 20-90 parts of a phase change function material, 5-75 parts of a cross-linked thermoplastic elastomer, and 5-75 parts of thermoplastic resin.

18. The method for improving the thermal stability of phase change function materials according to Claim 15, wherein, a compatibilizer can also be added with an amount of 0.1-5 parts.
